# EUROPEAN PATENT APPLICATION

(11) **EP 2 493 142 A1**
(43) Date of publication of application: **29.08.2012**
(21) Application number: 12000843.8
(22) Date of filing: 09.02.2012
(51) Int. Cl.: H04L 29/06, H04N 21/238

(54) **Gateway/STB interacting with cloud server that performs high end video processing**

(30) Priority: 23.02.2011 US 201113445683; 24.05.2011 US 201113114988
(71) Applicant: Broadcom Corporation, Irvine, CA 92617 (US)
(72) Inventor: Chen, Sherman, 92067 Rancho Santa Fe CA (US); Silyaev, Vladimir, 92677 Laguna Niguel CA (US); Kellerman, Marcus, 92127 San Diego CA (US); Erickson, David, 92672 San Clemente CA (US); Trerise, Alan, 95032 Los Gatos CA (US)
(74) Representative: Jehle, Volker Armin

(57) **Abstract**

A gateway includes a communications interface and processing circuitry and establishes communications with at least one service provider device and with a serviced client device. The gateway receives video on demand instructions from the serviced client device and transmits the video on demand instructions to the cloud server. The gateway then receives streamed video content from the cloud server, the streamed video content video processed based upon the video on demand instructions and, during some operations the streamed video content having video on demand icons formed therein. The gateway then transmits the streamed video content to the serviced client device. The advanced video processing instructions may be three-dimensional processing instruction, texturing, or another type of advanced video processing. The cloud server may also service a Video on Demand session for the serviced client device.

## Description

### CROSS-REFERENCE TO PRIORITY APPLICATION

This application claims priority under 35 U.S.C. § 119(e) to U.S. Provisional Application Serial No. 61/445,683, filed February 23, 2011, which is incorporated herein by reference in its entirety.

### BACKGROUND OF THE INVENTION

### 1. Field of the Invention

The present invention relates generally to electronic devices; and more particularly to streamed content delivery from/to and Internet Access of electronic devices.

### 2. Description of the Related Art

Multimedia systems in the home and within other premises are often times serviced by cable Set Top Boxes (STBs), satellite system STBs, and Digital Subscriber Line (DSL) STBs. These STBs now often service Internet Browsing activities of serviced devices. These serviced devices may be televisions, DVD players, portable media players, video games, and other types of client devices. Serviced devices may also include high functionality devices such as desktop computers, laptop computers, tablet computers and other high processing capacity devices. The STBs service Internet Browsing sessions for all serviced devices, independent of their processing abilities. Some of these processing devices have just enough processing capacity to service a web browser. However, as is generally known, web browsers are susceptible to viruses, malware, and other destructive content that are injected into the device during the Internet Browsing sessions. Processing devices without sufficient processing capacity to run protection software will become easily infected by such destructive content. Once this destructive content has infected one client computer it may wreak havoc with all client devices on the client side of a servicing STB. Further, the processing requirements of some web browser processes may exceed the processing abilities of the serviced devices, causing the web browsing process to partially or fully fail. Further, many client devices now desire to service advanced video processing, including texturing, Three-Dimensional viewing, etc. However, many of these client devices and their servicing STBs have insufficient processing resources to service such advanced video processing requirements.

### BRIEF SUMMARY OF THE INVENTION

According to an aspect of the invention, a method is provided for operating a gateway having at least one communications interface and processing circuitry, the method comprising:
establishing communications with at least one service provider device;
establishing communications with a serviced client device;
receiving advanced video processing instructions from the serviced client device;
transmitting the advanced video processing instructions to the cloud server;
receiving streamed video content from the cloud server, the streamed video content video processed based upon the advanced video processing instructions; and transmitting the streamed video content to the serviced client device.

Advantageously:
the advanced video processing instructions comprise three-dimensional processing instructions; and
the streamed video content has been three-dimensional processed by the cloud server.

Advantageously, the three-dimensional processing instructions are specific to the three-dimensional viewing operations of the serviced client device.

Advantageously, the three-dimensional processing instructions are specific to the make and model number of the serviced client device

Advantageously:
the advanced video processing instructions comprise texturing instructions; and
the streamed video content has been texture processed by the cloud server.

According to an aspect, a gateway comprises:
at least one communications interface; and
processing circuitry coupled to the at least one communications interface and operable to cause the gateway to:
   establishing communications with at least one service provider device;
   establishing communications with a serviced client device;
   receiving advanced video processing instructions from the serviced client device;
   transmitting the advanced video processing instructions to the cloud server;
   receiving streamed video content from the cloud server, the streamed video content video processed based upon the advanced video processing instructions; and transmitting the streamed video content to the serviced client device.

Advantageously:
the advanced video processing instructions comprise three-dimensional processing instructions; and
the streamed video content has been three-dimensional processed by the cloud server.

Advantageously, the three-dimensional processing instructions are specific to the three-dimensional viewing operations of the serviced client device.

Advantageously, the three-dimensional processing instructions are specific to the make and model number of the serviced client device

Advantageously:
the advanced video processing instructions comprise texturing instructions; and
the streamed video content has been texture processed by the cloud server.

According to an aspect, a method is provided for operating a gateway having at least one communications interface and processing circuitry, the method comprising:
establishing communications with at least one service provider device;
establishing communications with a serviced client device;
receiving video on demand instructions from the serviced client device;
transmitting the video on demand instructions to the cloud server;
receiving streamed video content from the cloud server, the streamed video content video processed based upon the video on demand instructions and, during some operations the streamed video content having video on demand icons formed therein; and transmitting the streamed video content to the serviced client device.

Advantageously, the video on demand instructions comprise at least one of keypad inputs and cursor inputs received from the serviced client device.

Advantageously:
during some operations the streamed video content represents a paused image;
during other some operations the streamed video content represents a slow motion image; and
during still other some operations the streamed video content represents a slow motion image.

According to an aspect, a gateway comprises:
at least one communications interface; and
processing circuitry coupled to the at least one communications interface and operable to cause the gateway to:
   establish communications with at least one service provider device;
   establish communications with a serviced client device;
   receive video on demand instructions from the serviced client device;
   transmit the video on demand instructions to the cloud server;
   receive streamed video content from the cloud server, the streamed video content video processed based upon the video on demand instructions and, during some operations the streamed video content having video on demand icons formed therein; and
   transmit the streamed video content to the serviced client device.

Advantageously, the video on demand instructions comprise at least one of keypad inputs and cursor inputs received from the serviced client device.

Advantageously:
during some operations the streamed video content represents a paused image;
during other some operations the streamed video content represents a slow motion image; and
during still other some operations the streamed video content represents a slow motion image.

According to an aspect, a method is provided for operating a cloud server having at least one communications interface and processing circuitry, the method comprising:
establishing communications with a gateway that services a provider device;
receiving video on demand instructions from the serviced client device via the gateway;
creating streamed video content based upon the video on demand instructions, wherein during some operations the streamed video content having video on demand icons formed therein; and
transmitting the streamed video content to the serviced client device via the gateway.

Advantageously, the video on demand instructions comprise at least one of keypad inputs and cursor inputs received from the serviced client device.

Advantageously:
during some operations the streamed video content represents a paused image;
during other some operations the streamed video content represents a slow motion image; and
during still other some operations the streamed video content represents a slow motion image.

According to an aspect, a cloud server comprises:
at least one communications interface; and
processing circuitry coupled to the at least one communications interface and operable to cause the gateway to:
   establish communications with a gateway that services a provider device;
   receive video on demand instructions from the serviced client device via the gateway;
   create streamed video content based upon the video on demand instruction, wherein during some operations the streamed video content having video on demand icons formed therein; and
   transmit the streamed video content to the serviced client device via the gateway.

Advantageously, the video on demand instructions comprise at least one of keypad inputs and cursor inputs received from the serviced client device.

Advantageously:
during some operations the streamed video content represents a paused image;
during other some operations the streamed video content represents a slow motion image; and
during still other some operations the streamed video content represents a slow motion image.

### BRIEF DESCRIPTION OF THE DRAWINGS

FIG. 1 is a block diagram illustrating a system constructed according to one or more embodiments of the present invention;
FIG. 2 is a block diagram illustrating a system constructed according to one or more other embodiments of the present invention;
FIG. 3 is a flow chart illustrating operations according to one or more embodiments of the present invention;
FIG. 4 is a flow chart illustrating operations according to one or more embodiments of the present invention;
FIG. 5A is a flow chart illustrating operations of a gateway according to one or more embodiments of the present invention;
FIG. 5B is a flow chart illustrating operations of a gateway according to one or more embodiments of the present invention;
FIG. 6 is a flow chart illustrating operations of a gateway according to one or more embodiments of the present invention;
FIG. 7 is a block diagram illustrating a Set Top Box/Gateway constructed according to one or more embodiments of the present invention;
FIG. 8 is a block diagram illustrating a cloud server constructed according to one or more embodiments of the present invention;
FIG. 9 is a block diagram illustrating a client device constructed according to one or more embodiments of the present invention; and
FIG. 10 is a diagram illustrating streamed video content having a screen portion that includes icons representing video on demand controls.

### DETAILED DESCRIPTION

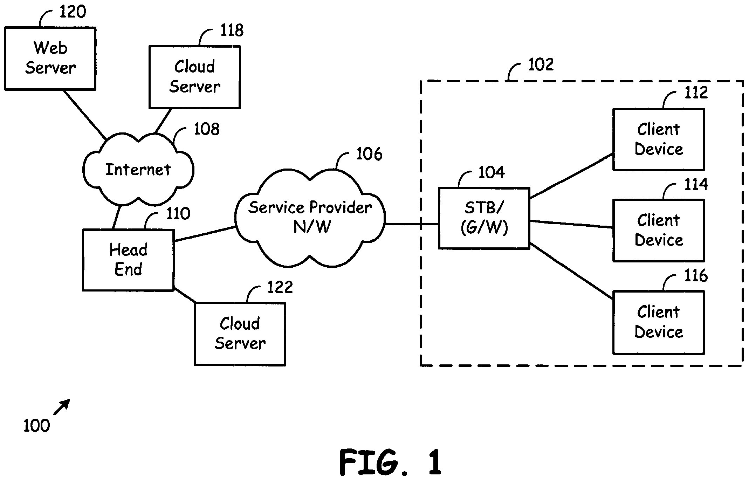

FIG. 1 is a block diagram illustrating a system 100 constructed according to one or more embodiments of the present invention. The system 100 is supported by an Internet Network 108 and includes a web server 120 coupled to the Internet 108, a cloud server 118 coupled to the Internet 108, a service provider head end 110 coupled to the Internet 108, a cloud server 122 coupled to the head end 110, and a service provider network 106 coupled to the head end. The service provider network 106 of FIG. 1 is one or more of a fiber network, a cable network, a telephone network, or another type network serviced by physical media.

A client site 102 includes a Set Top Box (STB) 104, referred to herein interchangeably as a Gateway (G/W), which services a plurality of client devices 112, 114, and 116 at a customer site, such as a home, office, or other customer setting. The client devices 112, 114, and 116 include one or more thin clients, the thin clients being televisions, video players, video game consoles, etc. The client devices 112, 114, and 116 may also include other devices that are not considered thin clients, such as desktop computers, laptop computers, tablet computers, etc. A thin client, as distinguished from a non-thin client, has limited processing capacity and limited memory.

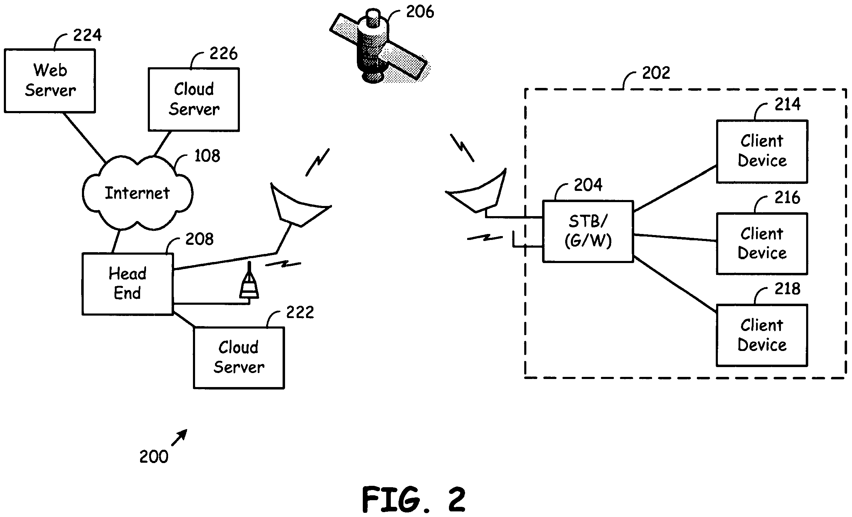

FIG. 2 is a block diagram illustrating a system 200 constructed according to one or more other embodiments of the present invention. The system 200 of FIG. 2 is similar to the system 100 of FIG. 1, except that a head end 208 communicates with a STB 204/Gateway via one or more wireless links, as contrasted to the wired links of FIG. 1. With the structure 200 of the system of FIG. 2, as well as the structure of FIG. 1, the STB 204 services a plurality of client devices 214, 216, and 218. The wireless link may be serviced by satellite dishes and convey communications between the head end 208 and the STB 204 via a satellite 206. Alternately, the wireless link may be serviced by a point to point wireless link, a Wireless Local Area Network (WLAN), a Wireless Wide Area Network (WWAN), or another type of wireless link, e.g., 60 GHz, etc.

STB 204 serves at least client device 214, 216, and/or 218 (Television, Personal Media Player, game console, laptop computer, desktop computer, palm computer, etc.). Each of the STB 204 and client devices 214, 216, and/or 218 may have limited resources for web browsing, e.g., processing of content contained in web pages to render experience to users. Some client devices 214, 216, or 218 may not be able to interact with web servers at all because of their reduced processing capabilities, i.e., not able to service a web browser application.

The STB 204 may have the ability to service web browsing for one or more of the client devices 214, 216, and/or 218 but may also be resource limited, e.g., memory, communications, and/or processing limited. A primary function of the STB 204 is to provide video service to the client devices. It cannot fail to provide this service while providing web browsing services to the client devices 214, 216, and/or 218. Thus, even though it may have the processing capabilities to service an Internet browsing session, it may not be able to service such Internet browsing session without interfering with its other processing requirements.

A cloud server 222 (or 226) couples to or is accessible to a head end 208 of the service provider. The cloud server 222 interacts with the STB 204 or client device 214, 216, and/or 218 via the STB 204 to remotely service web browsing session(s) for one or more of the client devices 214, 216, and/or 218. The cloud server 226 interacts with the STB 204 (via the head end 208) to interface with a user of a client device 214, 216, and/or 218 to receive user input, i.e., keypad input, cursor input, voice input, etc. The cloud server 222 or 226 supports at least a portion of a web browser session for a client device. The cloud server 222 or 226 produces a video stream (H.264, MPEG, AVC, etc.) that is streamed to the client device 214, 216, and/or 218 via the head end 208 and the STB 204.

By placing browser functionality in the cloud server 222 or 226, processing workload for the STB 204 and/or client devices 214, 216, and/or 218 is substantially reduced. Further, the cloud server 222 or 226 is better able to protect a client device 214, 216, and/or 218 and STB 204 from dangers associated with web browsing, e.g., IP service attack, malware, viruses, etc. Content that is available to the client devices 214, 216, and/or 218 may be limited by the cloud server 222 or 226.

Referring to both FIGs. 1 and 2, the system 100 of FIG. 1 and the system 200 of FIG. 2 both support advanced video processing and video on demand operations by a remote device. Referring particularly to FIG. 1, cloud server 118 services advanced video processing operations for client device 114, for example. In such case, the STB 104 establishes communications with cloud server 118 in providing service for client device 114. The client device 114 sends advanced video processing instructions to STB 104, which relays the advanced video instructions to cloud server 118. In response thereto, the cloud server 118 operate upon streamed video content that will be delivered to client device 114 to produce advanced video processing streamed content and sends such streamed content to the client device 114 via STB 104. With these operations, the advanced video processing is performed by cloud server 118 instead of by STB 104 or client device 114. The advanced video processing may include creating a 3-dimensional (3D) streamed image for client device 114 or a textured streamed video image for the client device 114.

Referring now to the system of FIG. 200, cloud server 226 provides a Video on Demand (VoD) experience for client device 214, for example. In such case, the client device 214, STB 204, and cloud server 226 interact to create the Video on Demand experience for the client device 214. In such case, a mouse or keyboard of the client device 214 receives input that is used to provide Video on Demand instructions via the STB to cloud server 226. The cloud server 226 prepares streamed video for client device 214 that looks or appears as if the client device 214 or STB 204 is providing the Video on Demand processing. The streamed video may be in an H.264 streaming video format, an MPEG streaming video format, or in another streaming video format. In such case, the cloud server 226 produces a streamed video that is transmitted to client device 214 via the Internet 108, head end 208, satellite 206, and STB 204.

Video on Demand instructions generated at client device 214 via user input are sent upstream via the STB 204 to cloud server 226. These Video on Demand instructions are used by the cloud server 226 to process the video and to create the streamed video for delivery to client device 214. With the operations described, the cloud server 226 may include in the streamed video icons that appear to be selectable by the client device 214. The client device 214 may have a mouse, cursor, or other user input devices that the user may use to initiate representative mouse cursor movements, mouse clicks, or Video on Demand input that is relayed to cloud server 226.

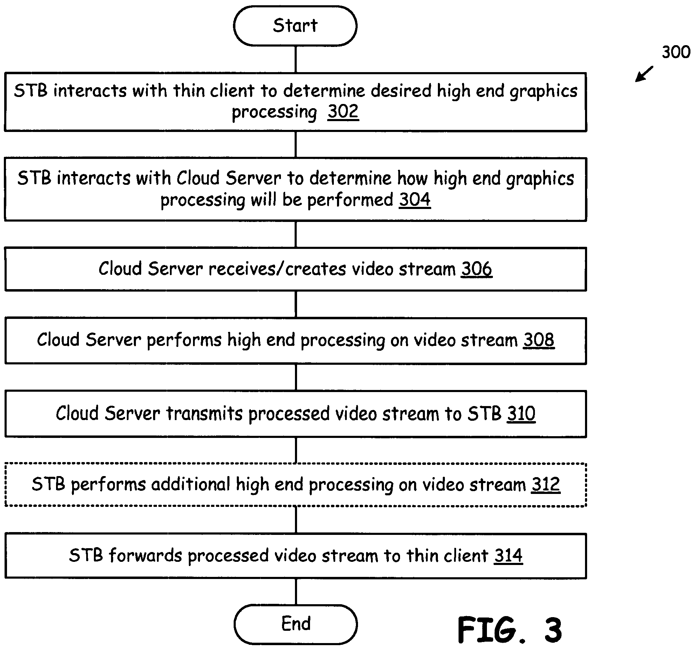

FIG. 3 is a flow chart illustrating operations according to one or more embodiments of the present invention. With the operations 300 of FIG. 3, a Cloud server 118 supplements the STB 104 by performing high end graphics processing as required such as 3D image processing, texturing, etc. and puts rendered output into H.264 stream that is streamed to STB/thin clients. Operations 300 commence with the STB 104 interacting with the thin client, such as 112, 114, or 116, to determine its desired high end graphics processing requirements (Step 302). In such case, the STB 104 may determine that the thin client desires to receive 3D images, textured images, etc. The STB 104 then interacts with the Cloud Server 118 to determine how the high end graphics processing will be performed (Step 304). The Cloud Server 118 then receives video content or creates the video stream from stored content (Step 306). The Cloud Server 118 then performs the high end graphics processing on the video stream (Step 308). The Cloud Server 118 then transmits the processed video stream to the STB 104 (Step 310). The STB 104 then optionally performs additional high end graphics processing on the video stream (Step 312). The STB 104 then forwards the processed video stream to the thin client, such as 112, 114, or 116, for presentation (Step 314).

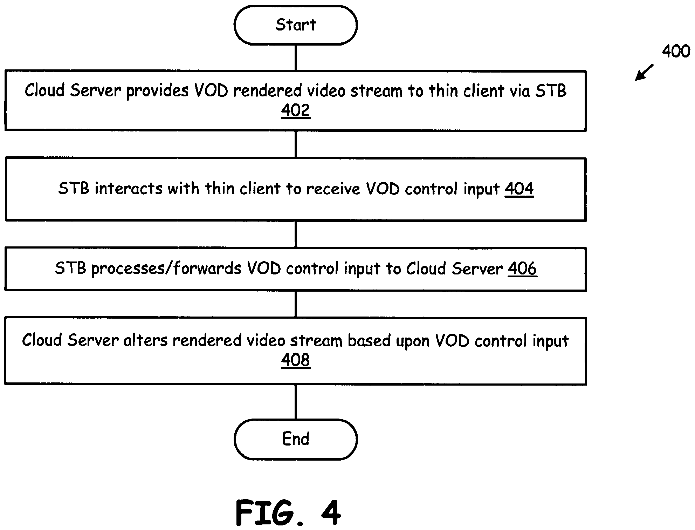

FIG. 4 is a flow chart illustrating operations according to one or more embodiments of the present invention. The Cloud server 118 can also serve as video on demand controller by providing full Video on Demand (VOD) functionality, i.e., graphical icons for control of program. Input is received from the thin client, such as 112, 114, or 116, via STB cursor input/keypad input via IP packets. Cloud server 118 receives input from thin client via STB 104, controls VOD stream, and renders controlled stream to STB/thin client. The operations 400 of FIG. 4 commence with the Cloud Server 118 providing a VOD rendered video stream to the thin client via the STB (Step 402). The STB 104 then interacts with the thin client to receive VOD control input (Step 404). The STB 104 then processes and/or forward the VOD control input to the Cloud Server 118 (Step 406). The Cloud Server 118 then alters the rendered video stream based upon the VOD control input (Step 408).

In supporting the VOD functionality, the Cloud Server 118 may imbed VOD control icons into the video stream it produces. The STB 104 (or thin client) receives cursor input from the thin client via a wireless keyboard or mouse, for example. The STB 104 then forwards this input to the Cloud Server 118 for subsequent processing by the Cloud Server 118. Based upon this processing, the Cloud Server 118 modifies the rendered video stream, providing VOD functionality.

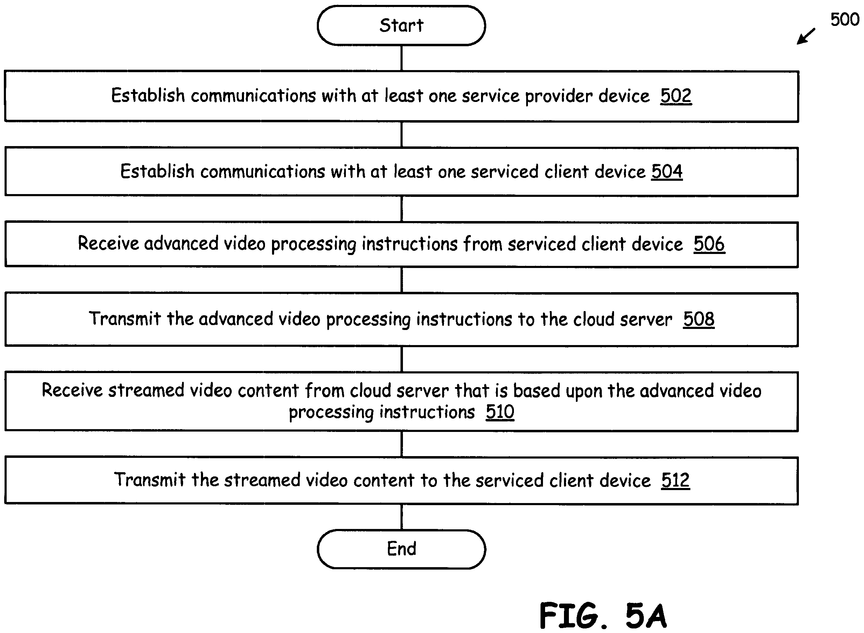

FIG. 5A is a flow chart illustrating operations of a gateway according to one or more embodiments of the present invention. The operations 500 of FIG. 5A may be performed by the system 100 of FIG. 1 and reference will be made thereto with the description of FIG. 5A. The operation 500 of FIG. 5A commences with the STB 104 establishing communications with at least one service provider device (Step 502). The service provider device may be cloud server 118, head end 110, or cloud server 122. Operation continues with the STB 104 establishing communications with at least one serviced client device 112, 114, or 116 (Step 504).

Then, the STB 104 receives advanced video processing instructions from a serviced client device 114 (Step 506). The advanced video processing instructions received may direct the servicing device to apply texture to a received video stream, a portion of a display of the video stream, direct that the video stream be processed to provide a 3-dimensional video stream, or otherwise to process the video stream. Resultantly, the STB 104 transmits the advanced video processing instructions to cloud server 118 (Step 508). Then, the STB 104 receives the streamed video content from the cloud server 118 that is based upon the advanced video processing instructions (Step 510). The STB 104 then transmits the streamed video content to the serviced client device (Step 512).

The advanced video processing instructions may include 3-dimensional processing instructions, which direct the cloud server 118 to 3-dimensionally process the video content prior to streaming the video content to the client device 114 via the head end 110, the Internet 108, the service provider network 106, and the STB 104. The 3-dimensional processing instructions may be specific to the serviced client device 114. In such case, the serviced client device 114 may require a particular formatted video stream to provide a 3-dimensional viewing experience to a user of the client device 114. In this case, the 3-dimensional processing instructions may include the make and model number of the serviced client device 114. The cloud server 118 then uses the information corresponding to the make and model of the serviced client device 114 to provide the appropriate video stream processing to create a video stream that will be presentable by the client device 114.

In another operation, the advanced video processing instructions are texturing instructions, which the client device 114 provides to request texturing of some or all of the streamed video content. The cloud server 118 processes the video content based upon the texturing instructions and provides the textured or processed video content to the client device 114.

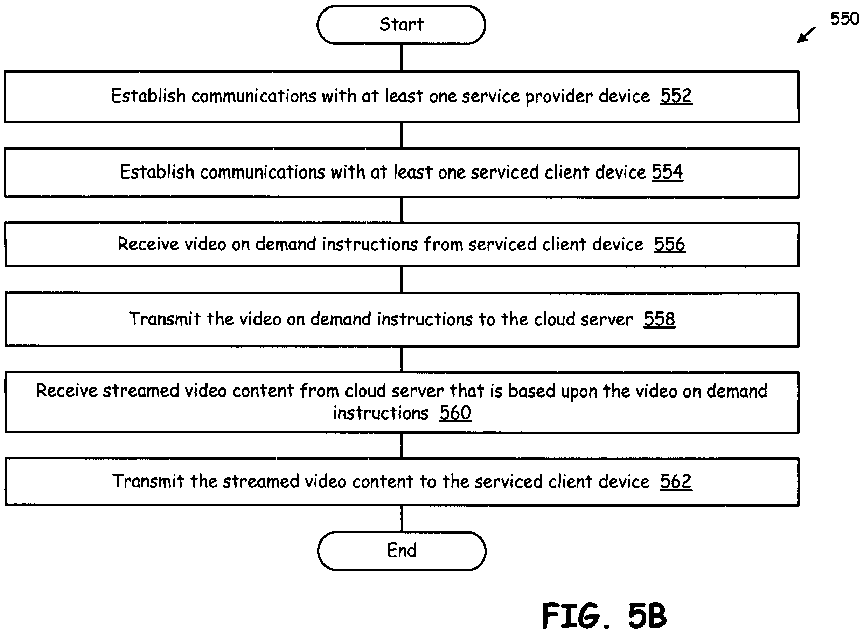

FIG. 5B is a flow chart illustrating operations of a gateway according to one or more embodiments of the present invention. The operations 550 of FIG. 5B commence with the STB 104 of FIG. 1 establishing communications with at least one service provider device (Step 552). The service provider device may include cloud server 118, head end 110, and/or cloud server 122. Operation continues with the STB 104 establishing communications with at least one serviced client device 112, 114, and/or 116 (Step 554).

The STB 104 then receives Video on Demand instructions from a serviced client device, e.g. 116 (Step 556). The STB 104 then transmits the Video on Demand instructions to a cloud server 122 (Step 558). Resultantly, the cloud server 122 produces streamed video content based upon the Video on Demand instructions and provides the streamed video content to STB 104. STB 104 receives the streamed video content from cloud server 122 that is based upon the Video on Demand instructions (Step 560). The STB 104 then transmits the streamed video content to the serviced client device 116 (Step 562). From Step 562, operation ends.

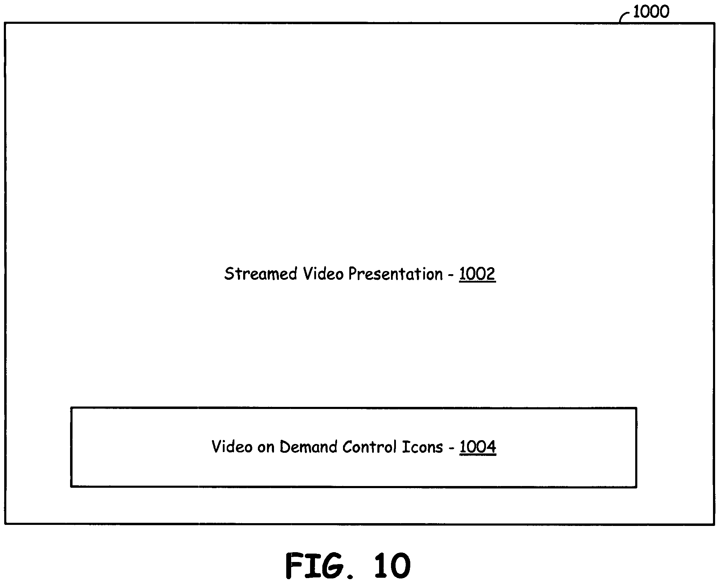

The Video on Demand instructions include at least one of key pad input and cursor input that are received from the serviced client device 116. The Video on Demand instructions are fairly simplistic and may be sent using IP packets from the client device 116 via the STB 104 to cloud server 122. With the simulated Video on Demand experience provided by the cloud server 122, during some operations, the streamed video content represents a paused image. Further, during other operations the streamed video content represents a slow motion image and, during still other operations, the streamed video content represents a slow motion image. As contrasted to other systems, the streamed video content is consistently a normal H.264, mpeg, or another streaming video session that includes a frame rate and refresh rate that is not different than normal streamed programming. However, the streamed images that are presented to the client device 116 via the STB 104 represent a Video on Demand experience, even though the content is not stored on the client device 116 or on the STB 104 as is in conventional systems. Moreover, as will be described further with reference to FIG. 10, the Video on Demand instructions are received from the STB 104 from client device 116 and passed as IP packets to the cloud server 122.

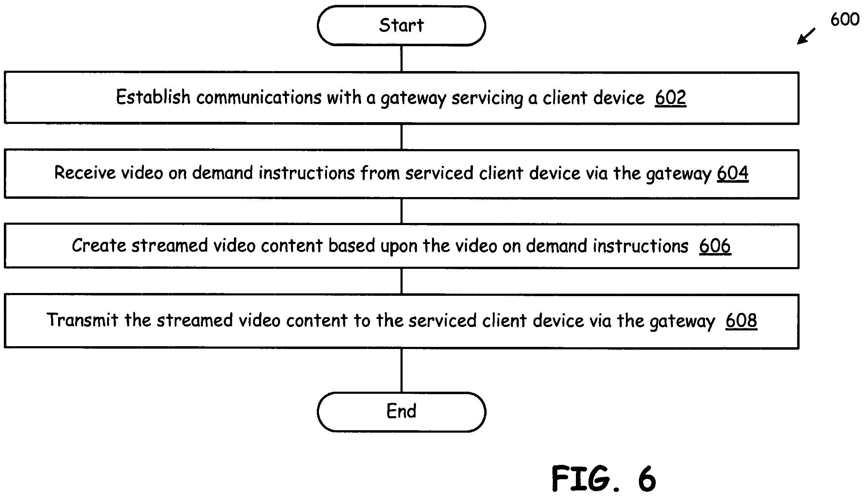

FIG. 6 is a flow chart illustrating operations of a gateway according to one or more embodiments of the present invention. The operations 600 of FIG. 6 commence with the cloud server 122 establishing communications with gateway 104 that services client device 116 (Step 602). The cloud server 122 then receives the Video on Demand instructions from a serviced client device 116 via the gateway 104 (Step 604). The cloud server 122 then creates the streamed video content based upon the Video on Demand instructions (Step 606). The cloud server 122 then transmits the streamed video content to the serviced client device 116 via the gateway 104 (Step 608). From Step 608, operation ends. Thus, the operations 600 of FIG. 6 illustrate the manner in which the cloud server 122 creates a Video on Demand experience for client device 116. However, the Video on Demand experience is remotely serviced from both STB 104 and client device 116. Likewise, the experience of the Video on Demand session is streamed in a standard streaming format from cloud server 122 to client device 116.

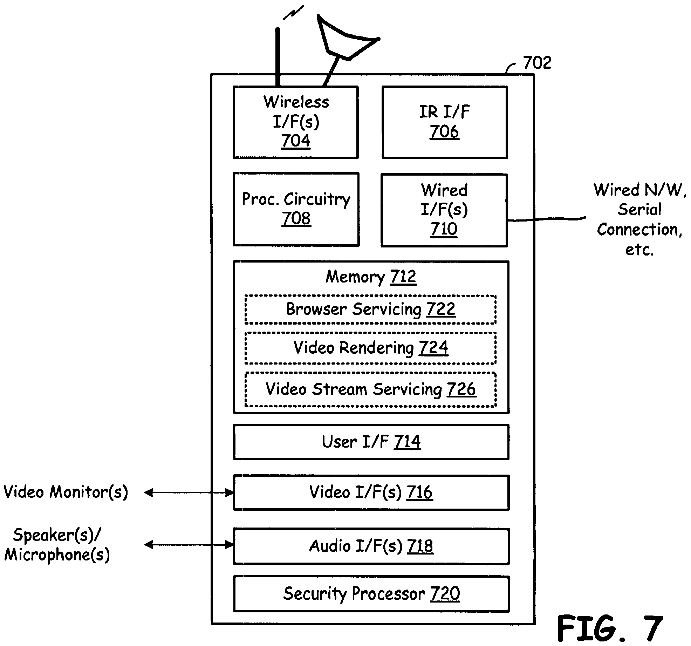

FIG. 7 is a block diagram illustrating a Set Top Box/Gateway 702 constructed according to one or more embodiments of the present invention. The STB 702 of FIG. 7 includes a wireless interface 704, an infrared interface 706, processing circuitry 708, one or more wired interfaces 710, and memory 712. The STB 702 typically would also include a user interface 714, at least one video interface 716, at least one audio interface 718, and may include a security processor 720. The wireless interfaces 704 support wireless communications with one or more wireless networks, including WLAN networks, WPAN networks, WWAN networks, satellite networks, and may also support communications with wireless serviced client devices. This wireless interface 704 may service communications consistent with cellular network standards, WPAN standards such as the Bluetooth standard, WLAN standards as IEEE 802.11x standards, WWAN standards such as the WiMAX standard, and/or another type of wireless communication standards. The IR (Infrared) interface 706 supports IR communications with remote controls and client devices. The IR communications may support an industry standard or proprietary communications protocol.

The processing circuitry 708 may include one or more of a system processor, a digital signal processor, a processing module, dedicated hardware, an application specific integrated circuit (ASIC), or other circuitry that is capable of executing software instructions and for processing data. The memory 712 may be RAM, ROM, FLASH RAM, FLASH ROM, optical memory, magnetic memory, or other types of memory that is capable of storing data and/or instructions in allowing processing circuitry to access same. The wired interfaces 710 may include a DSL interface, a USB interface, a fire wire interface, a serial interface, a parallel interface, an optical interface, or another type of interface supported by a media that is copper, metal, or optical.

The user interface 714 may include keypad, video display, cursor control, touch pad, or other type of interface that allows a user to interface with the STB 702. The video interface 716 couples the STB 702 to one or more video monitors. The communications link between the video interface 716 and the video monitor(s) may be an HDMI interface, a composite video interface, component video interface, an S-video interface, or another type of video interface supported by both the video monitor and the STB 702. The audio interface 718 couples the STB 702 to speakers and/or microphones for audio content delivery and receipt. The video camera/video camera interface 716 may include an onboard video camera or may couple the STB 702 to an external video camera. The security processor 720 provides security operations for the STB 702. The STB 702 supports the operations described with reference to FIGs. 1-6B and that will be described with reference to FIG. 10. Client devices previously described herein have structure similar to the STB 702 but may have lesser processing capabilities. In supporting these operations, computer instructions for browser servicing 722, video rendering 724, and video stream servicing 726 may be stored in memory 712.

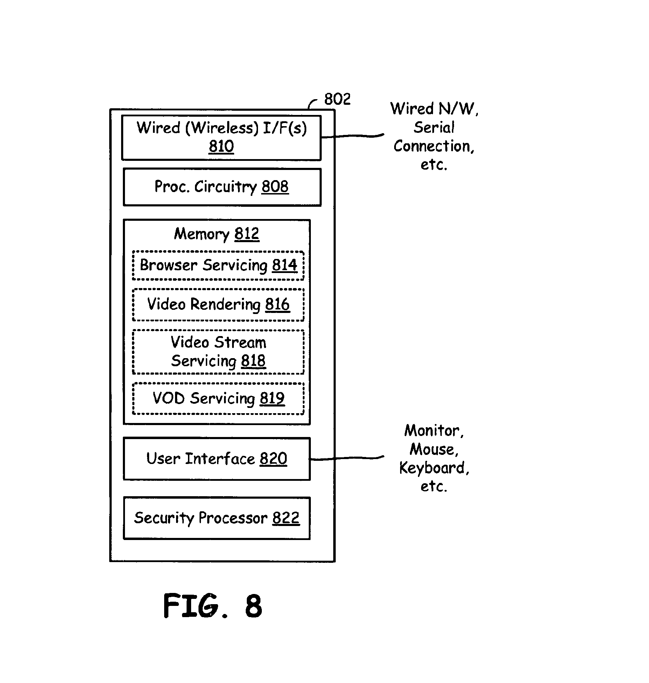

FIG. 8 is a block diagram illustrating a cloud server constructed according to one or more embodiments of the present invention. The cloud server 802 of FIG. 8 includes one or more wired or wireless interfaces 810. Each of these wired or wireless interfaces services data communications via a corresponding communication link. The wired interface may service coaxial communications, optical communications, or another type of wired communication that may provide high throughput for a particular connection. The wireless interface may be a WLAN interface, a satellite interface, a WWAN interface, or another type of wireless interface.

The processing circuitry 808 may include one or more processing units selected from, for example, system processors, reduced instruction set computing processors, digital signal processors, ASICs, custom logic, field programmable gate arrays, or another type of processing device that is capable of executing software instructions and processing digital data. Memory 812 includes one or more of RAM, ROM, DRAM, DROM, optical memory, flash RAM, magnetic memory, or another type of memory capable of storing software instructions and data. User interface 820 interfaces the cloud server to a user via a monitor, a keyboard, mouse, and other types of user input devices. The cloud server may also include a security processor 822 that operates to guarantee that the software on the cloud server 802 is secure and that communications between the cloud server 802 and a remote device are also secure.

According to various embodiments of the present invention, the memory 812 stores specialized computer instructions to service the various operations supported by the cloud server 802. In particular, the memory 812 stores browser servicing instructions 814, video rendering instructions 816, video stream servicing instructions 818, and Video on Demand servicing instructions 819. The browser servicing instructions 814 service an Internet browsing session when the cloud server 802 instantiates a browser to service the Internet browsing needs of one or more serviced client devices. Video rendering instructions 816 allow the cloud server 802 to render video stream representative of a service Internet browsing session. Further, video stream servicing instructions 818 stored in memory 812 allow the cloud server to stream the video representing the browser session instantiated by the cloud server. The Video on Demand servicing instructions 819, upon execution, support Video on Demand instructions.

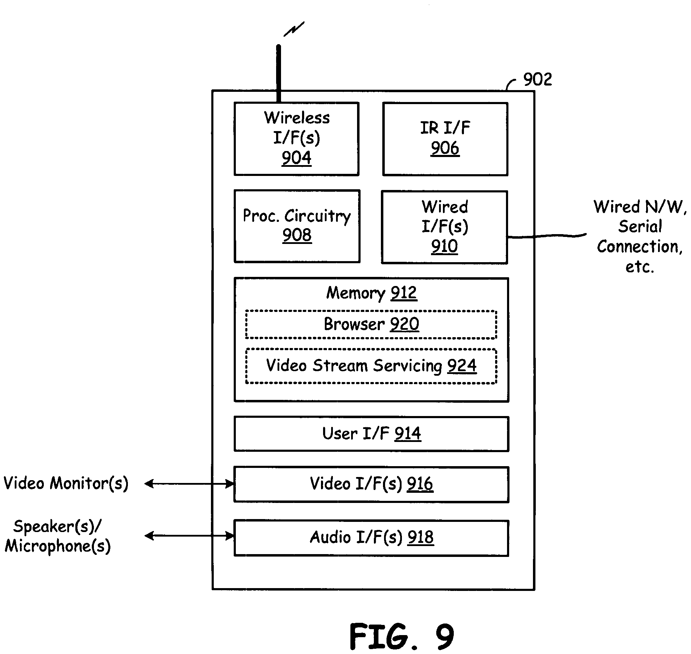

FIG. 9 is a block diagram illustrating a client device constructed according to one or more embodiments of the present invention. A client device 902 of FIG. 9 may be one or more of a laptop computer, desktop computer, notepad computer, digital video player, or another type of device. Thin clients would have fewer resources than would other types of clients that operate according to the present invention. The client device 902 may include a wireless interface 904, an infrared interface 906, and/or one or more wired interfaces 910. The client device 902 includes processing circuitry 908 which includes one or more processors and may include system processors, risk processors, digital signal processors, custom logic, FPGAs, A6, or other types of processing circuitry that are capable of executing software instructions and processing digital data.

Memory 912 may be RAM, ROM, flash RAM, flash ROM, magnetic memory, optical memory, or another type of memory that is capable of storing computer instructions and data. The client device 902 may include one or more user interfaces 914, one or more video interfaces 916, and one or more audio interfaces 918. According to the present invention, the memory 912 stores software instructions that include browser instructions 920 and video stream servicing instructions 924. The browser instructions 920 are those that, when executed, cause the client device 902 to instantiate a browser for an Internet browsing session upon the client device 902. The video stream servicing instructions 924 include instructions capable of receiving a video stream and presenting the video stream to the user via the video interface 916 and the audio interface 918. Further, these instructions 920 and 924 and/or other instructions are capable to allow a user to interface with the client device 902 to provide browsing input via the user interface 914.

FIG. 10 is a diagram illustrating streamed video content having a screen portion that includes icons representing video on demand controls. The screen display 1000 illustrated in FIG. 10 includes a streamed video presentation 1002 representing a video program with Video on Demand control icons 1004 presented therein. The screen display 1000 represents the streamed video content transmitted from cloud server 122 to client device 116 via STB 104. The streamed video presentation 1002 and Video on Demand control icons 1004 are formed in a single streamed video that is produced by the cloud server 122. A user of the client device 116 interacts remotely with cloud server 122 via Video on Demand instructions received via user input device from client device 116 that are provided via STB 104 to cloud server 122. These may be mouse inputs, cursor inputs, text inputs, or other inputs that are received via the user input devices or client device 116. Cloud server 122 based upon these instructions then modifies the streamed video content accordingly.

The terms "circuit" and "circuitry" as used herein may refer to an independent circuit or to a portion of a multifunctional circuit that performs multiple underlying functions. For example, depending on the embodiment, processing circuitry may be implemented as a single chip processor or as a plurality of processing chips. Likewise, a first circuit and a second circuit may be combined in one embodiment into a single circuit or, in another embodiment, operate independently perhaps in separate chips. The term "chip," as used herein, refers to an integrated circuit. Circuits and circuitry may comprise general or specific purpose hardware, or may comprise such hardware and associated software such as firmware or object code.

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

The present invention has been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention. One of average skill in the art will also recognize that the functional building blocks, and other illustrative blocks, modules and components herein, can be implemented as illustrated or by discrete components, application specific integrated circuits, processors executing appropriate software and the like or any combination thereof.

As may be used herein, the terms "substantially" and "approximately" provides an industry-accepted tolerance for its corresponding term and/or relativity between items. Such an industry-accepted tolerance ranges from less than one percent to fifty percent and corresponds to, but is not limited to, component values, integrated circuit process variations, temperature variations, rise and fall times, and/or thermal noise. Such relativity between items ranges from a difference of a few percent to magnitude differences. As may also be used herein, the term(s) "coupled to" and/or "coupling" and/or includes direct coupling between items and/or indirect coupling between items via an intervening item (e.g., an item includes, but is not limited to, a component, an element, a circuit, and/or a module) where, for indirect coupling, the intervening item does not modify the information of a signal but may adjust its current level, voltage level, and/or power level. As may further be used herein, inferred coupling (i.e., where one element is coupled to another element by inference) includes direct and indirect coupling between two items in the same manner as "coupled to." As may even further be used herein, the term "operable to" indicates that an item includes one or more of power connections, input(s), output(s), etc., to perform one or more its corresponding functions and may further include inferred coupling to one or more other items. As may still further be used herein, the term "associated with," includes direct and/or indirect coupling of separate items and/or one item being embedded within another item. As may be used herein, the term "compares favorably," indicates that a comparison between two or more items, signals, etc., provides a desired relationship. For example, when the desired relationship is that signal 1 has a greater magnitude than signal 2, a favorable comparison may be achieved when the magnitude of signal 1 is greater than that of signal 2 or when the magnitude of signal 2 is less than that of signal 1.

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

Moreover, although described in detail for purposes of clarity and understanding by way of the aforementioned embodiments, the present invention is not limited to such embodiments. It will be obvious to one of average skill in the art that various changes and modifications may be practiced within the spirit and scope of the invention, as limited only by the scope of the appended claims.

## Claims

1. A method for operating a gateway having at least one communications interface and processing circuitry, the method comprising:
establishing communications with at least one service provider device;
establishing communications with a serviced client device;
receiving advanced video processing instructions from the serviced client device;
transmitting the advanced video processing instructions to the cloud server;
receiving streamed video content from the cloud server, the streamed video content video processed based upon the advanced video processing instructions; and
transmitting the streamed video content to the serviced client device.

2. The method of claim 1, wherein:
the advanced video processing instructions comprise three-dimensional processing instructions; and
the streamed video content has been three-dimensional processed by the cloud server.

3. The method of claim 2, wherein the three-dimensional processing instructions are specific to the three-dimensional viewing operations of the serviced client device.

4. The method of claim 3, wherein the three-dimensional processing instructions are specific to the make and model number of the serviced client device

5. The method of claim 1, wherein:
the advanced video processing instructions comprise texturing instructions; and
the streamed video content has been texture processed by the cloud server.

6. A gateway comprising:
at least one communications interface; and
processing circuitry coupled to the at least one communications interface and operable to cause the gateway to:
establishing communications with at least one service provider device;
establishing communications with a serviced client device;
receiving advanced video processing instructions from the serviced client device;
transmitting the advanced video processing instructions to the cloud server;
receiving streamed video content from the cloud server, the streamed video content video processed based upon the advanced video processing instructions; and
transmitting the streamed video content to the serviced client device.

7. The gateway of claim 6, wherein:
the advanced video processing instructions comprise three-dimensional processing instructions; and
the streamed video content has been three-dimensional processed by the cloud server.

8. The gateway of claim 7, wherein the three-dimensional processing instructions are specific to the three-dimensional viewing operations of the serviced client device.

9. The gateway of claim 8, wherein the three-dimensional processing instructions are specific to the make and model number of the serviced client device

10. The gateway of claim 6, wherein:
the advanced video processing instructions comprise texturing instructions; and
the streamed video content has been texture processed by the cloud server.

11. A method for operating a gateway having at least one communications interface and processing circuitry, the method comprising:
establishing communications with at least one service provider device;
establishing communications with a serviced client device;
receiving video on demand instructions from the serviced client device;
transmitting the video on demand instructions to the cloud server;
receiving streamed video content from the cloud server, the streamed video content video processed based upon the video on demand instructions and, during some operations the streamed video content having video on demand icons formed therein; and
transmitting the streamed video content to the serviced client device.

12. The method of claim 11, wherein the video on demand instructions comprise at least one of keypad inputs and cursor inputs received from the serviced client device.

13. A gateway comprising:
at least one communications interface; and
processing circuitry coupled to the at least one communications interface and operable to cause the gateway to:
establish communications with at least one service provider device;
establish communications with a serviced client device;
receive video on demand instructions from the serviced client device;
transmit the video on demand instructions to the cloud server;
receive streamed video content from the cloud server, the streamed video content video processed based upon the video on demand instructions and, during some operations the streamed video content having video on demand icons formed therein; and
transmit the streamed video content to the serviced client device.

14. A method for operating a cloud server having at least one communications interface and processing circuitry, the method comprising:
establishing communications with a gateway that services a provider device;
receiving video on demand instructions from the serviced client device via the gateway;
creating streamed video content based upon the video on demand instructions, wherein during some operations the streamed video content having video on demand icons formed therein; and
transmitting the streamed video content to the serviced client device via the gateway.

15. A cloud server comprising:
at least one communications interface; and
processing circuitry coupled to the at least one communications interface and operable to cause the gateway to:
establish communications with a gateway that services a provider device;
receive video on demand instructions from the serviced client device via the gateway;
create streamed video content based upon the video on demand instruction, wherein during some operations the streamed video content having video on demand icons formed therein; and
transmit the streamed video content to the serviced client device via the gateway.
